# EUROPÄISCHE PATENTANMELDUNG

(11) **EP 0 625 483 A1**
(43) Veröffentlichungstag der Anmeldung: **23.11.1994**
(21) Anmeldenummer: 94105524.6
(22) Anmeldetag: 09.04.1994
(51) Int. Cl.: C02F 1/32, C02F 1/72

(54) **Verfahren zum Abbau von polymeren Schadstoffen in Wasser mittels Wasserstoffperoxid unter UV-Bestrahlung**

(30) Priorität: 18.05.1993 DE 4316452
(71) Anmelder: Degussa Aktiengesellschaft, D-60311 Frankfurt (DE)
(72) Erfinder: Funke, Werner, Prof. Dr., D-71229 Leonberg (DE); Bilger, Edgar, Dr., D-63594 Hasselroth (DE); Schulte, Peter, Dr., D-63755 Alzenau (DE); Kuhn, Frank-Dieter, D-63571 Gelnhausen (DE)

(57) **Zusammenfassung**

Die Erfindung betrifft ein Verfahren zum Abbau von polymeren Schadstoffen in Wasser, insbesondere in Wasser gelösten oder dispergierten Lackbindemitteln.

Der Abbau polymerer Stoffe in Wasser bereitet gegenüber niedermolekularen Stoffen bekanntermaßen oft Probleme.

Erfindungsgemäß erfolgt der Abbau polymerer Stoffe in Wasser unter Zusatz von Hydroxylradikale bildender Verbindungen, insbesondere Wasserstoffperoxid, unter UV-Bestrahlung. Erfindungsgemäß liegt das Verhältnis des nicht-bestrahlten zu bestrahltem Reaktorvolumen oberhalb 2, vorzugsweise oberhalb 5. Das spezifische Volumen liegt zwischen 4 und 1000 l pro kW elektrischer Leistung des/der UV-Strahler.

## Beschreibung

Die Erfindung richtet sich auf ein Verfahren zum Abbau von polymeren Schadstoffen, insbesondere wasserlöslichen oder wasserdispergierbaren Lackbindemitteln, etwa solchen auf Acrylsäureester- oder Polyurethanbasis, in Wasser durch Zugabe Hydroxylradikale bildender Verbindungen, insbesondere Wasserstoffperoxid, zum zu behandelnden schadstoffhaltigen Wasser und UV-Bestrahlung, insbesondere polychromatischer Strahlung im Bereich von etwa 185 bis 400 nm, in einem Rührreaktor oder Durchflußreaktor.

Es ist bekannt - siehe beispielsweise US 4,012,321, US 4,446,029 , DE-OS 38 36 850 und D. Ott in Wasserkalender 1989, Seiten 134-158 -, daß sich die Oxidationswirkung von Wasserstoffperoxid dadurch kräftig steigern läßt, daß dieses in wäßriger Lösung mit monochromatischer oder polychromatischer ultravioletter Strahlung bestrahlt wird. Durch die UV-Bestrahlung zerfällt Wasserstoffperoxid in Hydroxylradikale, und die im Wasser enthaltenen Schadstoffe werden durch dieses starke Oxidationsmittel abgebaut. Dieses Verfahren eignet sich zum Abbau chemisch unterschiedlichster Stoffklassen, wie etwa Kohlenwasserstoffen, Alkoholen, Ethern, Säuren, Aldehyden und Ketonen, Amino- und Halogenverbindungen, Cyaniden. Bei den in vorbekannten Dokumenten genannten, nach diesem Verfahrensprinzip abbaubaren Schadstoffen handelt es sich stets um monomere, besonders niedermolekulare Verbindungen.

Als Strahlungsquelle für monochromatische Strahlung mit Wellenlängen von beispielsweise 185, 254 und 265 nm werden meist Quecksilber-Niederdruckstrahler, für polychromatische Strahlung mit einem Wellenlängenspektrum im Bereich von etwa 185 bis 400 nm sogenannte Mittel- oder Hochdruckstrahler verwendet. Sofern dies erwünscht ist, läßt sich die Oxidationswirkung des Systems H₂O₂/UV-Bestrahlung durch Zugabe von Übergangsmetallionen, insbesondere Eisenionen, weiter steigern - siehe US 5,043,080.

Die Behandlung schadstoffhaltiger Wässer mittels H₂O₂/UV-Bestrahlung erfolgt im technischen Maßstab im allgemeinen in Durchflußreaktoren. Bei geringer Schadstoffbelastung oder leicht abbaubaren Stoffen kann ein einmaliger Durchlauf des mit Wasserstoffperoxid versetzten Wassers durch den bestrahlten Reaktor ausreichend sein. Eine hohe Schadstoffbelastung erfordert eine Prozeßführung mit Rücklauf. Es ist bekannt, daß die Eindringtiefe der Strahlung in die zu behandelnde Lösung in Abhängigkeit von der Wellenlänge der Strahlung und der Konzentration an Wasserstoffperoxid und Schadstoffen nur wenige mm bis einige cm beträgt.

Gemäß allgemeiner Lehrmeinung mußten, um in Anbetracht des aufgezeigten Absorptionsverhaltens eine befriedigende Wirkung zu erzielen, die dem Strahler nahen Flüssigkeitsschichten ständig erneuert und somit die gesamte Flüssigkeitsmenge der kurzwelligen Strahlung ausgesetzt werden. Hierzu wird in der Regel die zu behandelnde Lösung kontinuierlich mit hoher Geschwindigkeit durch einen oder mehrere, hintereinander geschaltete, meist röhrenförmige Durchfluß-UV-Reaktoren gepumpt. Im Verfahren der DE-OS 38 36 850 werden beispielgemäß Reaktoren mit einer Gesamtschichtdicke durchstrahlter Lösung von 1,65 bis 12,5 cm, im Verfahren der EP-A 0 436 922 solche mit einer Schichtdicke von 0,1 bis 50 mm eingesetzt. Die Schichtdicke kann mit abnehmender Schadstoffkonzentration wegen der dann gegebenen größeren Eindringtiefe der UV-Strahlung vergrößert werden.

In handelsüblichen röhrenförmigen Durchfluß-UV-Reaktoren liegt deren spezifisches Volumen meist im Bereich von 1 bis 10 l pro Kilowatt (kW) elektrischer Leistung des/der Strahler; der Durchfluß pro Stunde sollte nach Herstellerangaben stets möglichst hoch sein, um eine ideale Durchmischung zu erzielen, und beläuft sich in aller Regel auf etwa das 20- bis 50-fache des Volumens des UV-Reaktors.

Die JP-1-25 87 94-A beansprucht ein Verfahren zur oxidativen Zersetzung von Isopropanol enthaltenden Wässern unter Verwendung von Wasserstoffperoxid und UV-Bestrahlung. Die Schichtdicke zwischen der UV-Lampe und Reaktorinnenwand beträgt im Falle einer UV-Hochdrucklampe 200 bis 400 mm. Gemäß diesem Dokument führt eine Erhöhung der Schichtdicke zu keiner Leistungssteigerung, sondern verteuert nur das Verfahren. In Anbetracht der geringen Absorption der UV-Strahlung mit 265 nm Wellenlänge durch Isopropanol und andere niedere Alkohole liegt die angegebene Schichtdicke um/unter der Eindringtiefe. Aus diesem Dokument geht nicht hervor, daß auch polymere (hochmolekulare) Stoffe abgebaut werden können. Auch wird der Fachmann davon weggeführt, zwecks Leistungssteigerung einen Reaktor mit nicht-bestrahlten und bestrahlten Volumenanteilen zu verwenden.

In der noch nicht veröffentlichten Patentanmeldung P 41 38 421.0 wird ein Verfahren zum Abbau von Schadstoffen in Wasser gelehrt, wobei ein spezifisches Volumen von mindestens 10 l pro kW UV-Strahler-leistung, eine Durchflußgeschwindigkeit entsprechend dem 0,25- bis 25-fachen Reaktorvolumen pro Stunde und ein Verhältnis von nicht-bestrahltem zu bestrahltem Volumen von größer 2 bei der Behandlung eingesetzt werden. Bei den gemäß den Verfahren dieses Dokuments zu behandelten Schadstoffen handelt es sich ausschließlich um niedermolekulare Stoffe; Hinweise auf die Einsetzbarkeit des Verfahrens auf die Behandlung von polymeren organischen Schadstoffen in Wasser lassen sich diesem Dokument nicht entnehmen.

Nachteilig an den vorbekannten Verfahren und handelsüblichen Reaktoren ist das Erfordernis, technisch aufwendige UV-Reaktoren verwenden zu müssen.

Zudem müssen die Anlagen derart ausgestaltet sein, daß sie mit hohem Durchfluß betrieben werden können, wodurch das erforderliche Investitionsvolumen weiter zunimmt.

Wie bereits dargelegt, richten sich die vorbekannten gattungsgemäßen Verfahren stets auf den Abbau niedermolekularer, im wesentlichen monomerer Stoffe. Hochmolekulare Stoffe, wie Polymerisate oder Polyadditionsharze enthaltende Wässer, wurden bisher nicht mittels H₂O₂/UV-Bestrahlung behandelt. Aufgrund der zunehmenden Herstellung und Verwendung wasserlöslicher oder wasserverdünnbarer Lacke, kommt es zum Anfall von polymere Schadstoffe enthaltenden Abwässern - etwa als Spritzwasser oder Spülwasser von Lackieranlagen. Der CSB-Gehalt derartiger Wässer, welche die polymeren Bindemittel meist in einer Menge von 0,02 bis 0,2 Gew.-% enthalten sowie deren oft unbefriedigende biologische Abbaubarkeit, machen eine Abwasserbehandlung erforderlich.

Versuche, Lackbindemittel auf der Basis von Polyacrylsäureestern und Polyurethanharzen durch UV-Bestrahlung zu zerstören oder durch Vernetzung zur Ausfällung zu bringen, verliefen bisher ergebnislos.

Aufgabe der vorliegenden Erfindung ist, ein Verfahren zum Abbau von Abwasserschadstoffen aufzuzeigen, das es gestattet, polymere organische Schadstoffe, welche im Wasser gelöst oder dispergiert sind, in wirtschaftlicher Weise abzubauen. Die polymeren Schadstoffe sollten hierbei weitgehend zerstört oder zumindest in biologisch abbaubare Reaktionsprodukte überführt werden.

Eine weitere Aufgabe richtet sich darauf, daß für niedermolekulare Stoffe bekannte Verfahren unter Verwendung Hydroxylradikale bildender Stoffe und UV-Bestrahlung für polymere Schadstoffe enthaltenden Wässer anwendbar zu machen und dabei den apparativen Aufwand der Behandlungsanlage bei gegebener Leistung des/der UV-Strahler gegenüber vorbekannten Anlagen zu verringern.

Gefunden wurde ein Verfahren zum Abbau von polymeren organischen Schadstoffen in Wasser durch Zugabe Hydroxylradikale bildender Verbindungen, insbesondere Wasserstoffperoxid, zum zu behandelnden schadstoffhaltigen Wasser und UV-Bestrahlung, insbesondere mit polychromatischer Strahlung im Bereich von 185 bis 400 nm, in einem Batchreaktor oder Durchflußreaktor, das dadurch gekennzeichnet ist, daß man die Bestrahlung in einem Reaktor durchführt, dessen Verhältnis von nicht-bestrahltem zu bestrahltem Volumen, bestimmt durch die Eindringtiefe bei einer Wellenlänge von 265 nm, größer 2 ist, der Reaktor ein spezifisches Volumen von 4 bis 1000 l pro kW elektrischer Leistung des/der UV-Strahler aufweist und bei Verwendung eines Durchflußreaktors dieser pro Stunde von der 0,25- bis 25-fachen Menge seines Eigenvolumens an zu behandelndem Wasser durchströmt wird.

Bei den polymeren organischen Schadstoffen handelt es sich um Polymerisations-, Polyadditions- oder Polykondensationsverbindungen, welche in Wasser eine gewisse Löslichkeit oder zumindest Dispergierbarkeit aufweisen. Die Löslichkeit beziehungsweise Dispergierbarkeit wird durch die Anwesenheit einer ausreichenden Zahl hydrophiler Gruppen, wie insbesondere solche aus der Reihe der Hydroxyl-, Carboxyl-, Ether-, Amino-, Urethan- und Harnstoffgruppen, im Polymersystem bewirkt. Wasserlösliche oder wasserverdünnbare Lacke enthalten Bindemittel der genannten Art. Bei derartigen Lackbindemitteln handelt es sich vorzugsweise um Polymerisate und Copolymerisate auf der Basis von Acrylsäureestern; die Copolymerisate können außer Arcylsäureesterbausteinen auch Methacrylsäureester-, Methacrylsäure- und Acrylsäurebausteine aufweisen. Eine weitere Klasse von wasserlöslichen oder wasserverdünnbaren (=wasserdispergierbaren) Lackbindemitteln sind Polyurethanharze.

Die Reaktoren für die Behandlung des Wassers mit Hydroxylradikale bildenden Stoffen unter UV-Bestrahlung können beliebiger Bauart sein. Es ist ein besonderer Vorteil des erfindungsgemäßen Verfahrens, daß übliche, meist runde zylinderförmige Reaktionsbehälter eingesetzt werden können, auch solche mit einem Volumen von mehreren m³ , und somit aufwendige Reaktorkonstruktionen nicht erforderlich sind. Die Reaktoren können für diskontinuierlichen Betrieb als Batchreaktoren mit oder ohne Rühr- oder Umpumpvorrichtung ausgebildet sein; für kontinuierlichen Betrieb werden üblicherweise Durchflußreaktoren verwendet.

In dem Reaktor können ein oder mehrere UV-Strahler in unterschiedlicher Anordnung, in Rundbehältern beispielsweise axial oder radial, eingebaut sein. Das jedem Strahler zuzuordnende bestrahlte Reaktorvolumen ist wesentlich kleiner als das diesem Strahler zuzuordnende Gesamtvolumen des Reaktors. In dem Reaktor liegen bestrahlte und nicht-bestrahlte Volumenanteile nebeneinander vor. Das Verhältnis des nicht-bestrahlten zum bestrahlten Volumen ist größer 2, vorzugsweise größer 5. Das bestrahlte Volumen läßt sich aus der Eindringtiefe der UV-Strahlung ermitteln, wobei sich das genannte Volumenverhältnis auf eine Wellenlänge von 265 nm bezieht. Die Eindringtiefe läßt sich aus UV-Absorptionsspektren ermitteln. Zur Steigerung der Kapazität und/oder der Abbaurate an Schadstoffen lassen sich in an sich bekannter Weise mehrere UV-Reaktoren hintereinander schalten. Das Verhältnis des nicht-bestrahlten zu bestrahltem Reaktorvolumen läßt sich über den geforderten Wert von mindestens 2 auch dadurch erhöhen, daß man den UV-bestrahlten Reaktor im Kreislauf mit einem unbestrahlten Behälter betreibt.

Im Prinzip läßt sich das Verfahren mit UV-Strahlen mit monochromatischer oder polychromatischer Strahlung realisieren, jedoch werden Strahler mit polychromatischer Strahlung mit einem UV-Spektrum im Bereich von 185 bis 400 nm deutlich bevorzugt; das gesamte Spektrum der UV-Hochdruckstrahler überstreicht im allgemeinen zusätzlich auch Bereiche des sichtbaren Lichts. Im Falle polychromatischer Strahlung von Mittel- und Hochdruckstrahlern bedarf es überraschenderweise keiner zusätzlichen Einrichtung, um die Turbulenz zwecks Durchmischung des Reaktorinhalts zu erhöhen; durch die Wärmeentwicklung derartiger Strahler wird eine ausreichende Durchmischung erreicht. Die Erwärmung selbst unterstützt den Schadstoffabbau.

Das jedem Strahler zuzuordnende spezifische Volumen (l Reaktorvolumen pro kW elektrischer Strahlerleistung) liegt im Bereich von 4 bis 1000 l pro kW und vorzugsweise von über 10 bis 200 l pro kW.

Soweit die Behandlung in einem Durchflußreaktor durchgeführt wird, ist es vorteilhaft, wenn der Reaktor von der 0,25- bis 10-fachen, insbesondere 0,5- bis 5-fachen, Menge seines Eigenvolumens an zu behandelndem Wasser durchströmt wird.

Erfindungsgemäß wird die verfügbare Strahlerleistung überraschenderweise besser genutzt als in vorbekannten Verfahren, wobei UV-Reaktoren zum Einsatz gelangen, in welchen die Schichtdicke im wesentlichen gleich oder kleiner der Eindringtiefe ist. Es wird angenommen, daß die Steigerung der Abbaurate bei gegebener Strahlerleistung dadurch zustande kommt, daß im Reaktor des erfindungsgemäßen Verfahrens mehrere Reaktionen parallel ablaufen, darunter (a) die Photoreaktion unter Bildung der reaktionsfähigen Hydroxyl-Radikale, (b) deren Umsetzung mit den Schadstoffen, (c) die Umsetzung von durch UV-Absorption aktivierten Schadstoffmolekülen mit Wasserstoffperoxid und (d) die Oxidation von aus der Umsetzung gemäß (b) und (c) erhaltenen Folgeprodukten mit H₂O₂ oder OH-Radikalen.

Das im Batchreaktor enthaltende oder den Durchflußreaktor durchströmende zu behandelnde Wasser enthält Wasserstoffperoxid in wirksamer Menge. Die Dosierung von Wasserstoffperoxid erfolgt in an sich bekannter Weise mittels wäßriger Lösungen mit einem Gehalt zwischen 0,3 und 85 Gew.-%, insbesondere 30 bis 75 Gew.-%, wobei sich die Menge nach dem Schadstoffgehalt und dem gewünschten Schadstoffabbau richtet. Der Fachmann wird die optimale H₂O₂-Menge durch einen orientierenden Versuch ermitteln. Anstelle H₂O₂ können auch solche Verbindungen eingesetzt werden, welche in wäßriger Lösung H₂O₂ abspalten, etwa Natriumpercarbonat oder -perborat, oder unter UV-Bestrahlung selbst OH-Radikale bilden, etwa Peroxycarbonsäuren.

Die Temperatur kann während der erfindungsgemäßen H₂O₂/UV-Behandlung im Bereich von etwa 5 bis etwa 95 ^{o}C, insbesondere 20 bis 90 ^{o}C, liegen. Bei schwer abbaubaren Stoffen ist eine Behandlung bei erhöhter Temperatur, wie etwa 40 bis 80 ^{o}C, vorteilhaft. Bei Verwendung von Mittel- und Hochdruckstrahlern kann es im Falle hohen Energieeintrags im Batchverfahren oder bei geringem Durchfluß gegebenenfalls zu einer zu starken Erwärmung kommen, so daß hier Maßnahmen zur Kühlung erforderlich sind, um die Temperatur unter 95 ^{o}C zu halten. Bei Niederdruckstrahlern ist in aller Regel ein Konstanthalten der Temperatur im Bereich von 5 bis 30 ^{o}C erforderlich.

Das erfindungsgemäße Verfahren schließt auch die Mitverwendung von katalytisch wirksamen Übergangsmetallionen, wie insbesondere Fe-Ionen, ein. Das System H₂O₂/UV/Fe-Ionen zeigt bekanntlich gegenüber den Systemen H₂O₂/UV und H₂O₂/Fe-Ionen einen synergistischen Effekt. Das System H₂O₂/UV/Fe-Ionen macht aber in der Regel eine Abtrennvorrichtung für die resultierenden Eisenhydroxidschlämme sowie Maßnahmen zur Rückführung von Fe-Ionen oder Entsorgung der Schlämme erforderlich.

Es war nicht vorhersehbar, daß sich auch im Wasser gelöste oder dispergierte polymere Stoffe glatt mit H₂O₂ unter UV-Bestrahlung abbauen lassen. Dies war im Hinblick auf die negativen Ergebnisse mit UV-Bestrahlung allein nicht zu erwarten. Gerade bei Polyurethan-Lackbindemitteln, welche bekanntermaßen oft eine hohe UV-Stabilität aufweisen, war es überraschend, daß die erfindungsgemäße Kombination - H₂O₂-Zugabe und UV-Bestrahlung - zum Erfolg führt.

Es war auch nicht vorhersehbar, daß durch Maßnahmen, welche der herrschenden Meinung der Fachwelt entgegengerichtet sind, nämlich der Verwendung von Reaktoren mit einem hohen Verhältnis von nicht-bestrahltem zu bestrahltem Reaktorvolumen sowie der Vergrößerung des spezifischen Reaktorvolumens weit über bisher übliche Bereiche hinaus, ein glatter Schadstoffabbau bei gleichzeitig vermindertem apparativen Aufwand und besserer Nutzung der Strahlerleistung möglich ist.

### Beispiel 1

In einem mit einem 1 kW UV-Hochdruckstrahler ausgestatteten Batchreaktor (Höhe 80 cm, Durchmesser 10 cm), mit einem Volumen von 4 l und axial angeordnetem Strahler wurde eine wäßrige Lösung behandelt, welche 0,05 Gew.-% eines Lackbindemittels auf der Basis eines Acrylsäureester-Copolymerisats enthielt. Zur Lösung wurde Wasserstoffperoxid (50 Gew.-%) zugegeben (entsprechend 3520 mg H₂O₂ pro l) und diese Lösung bestrahlt. Die Eindringtiefe der UV-Strahlung mit 265 nm betrug nur wenige mm, so daß das Verhältnis des nicht-bestrahlten zu bestrahltem Volumen wesentlich größer als 2 war. Der Verlauf des Schadstoffabbaus wurde über die CSB-Bestimmung (CSB = chemischer Sauerstoffbedarf) verfolgt; gleichzeitig wurde der H₂O₂-Gehalt bestimmt. Die Ergebnisse folgen aus der Tabelle:

| t (min) | T (^{o}C) | pH | H₂O₂-Konz. (mg/l) | CSB-Wert (mg/l) |
|---|---|---|---|---|
| 0 | 22 | 7,0 | 3520 | 874 |
| 10 | 33 | 4,2 | 2600 | 865 |
| 20 | 50 | 3,7 | 310 | 795 |
| 30 | 50 | 3,5 | 35 | 640 |
| 35 | 50 | 3,5 | 10 | 615 |

### Beispiel 2

Behandelt wurde eine 0,05 gew.-%ige Polyurethanharzdispersion in der in Beispiel 1 genannten Vorrichtung. Der CSB-Wert der eingesetzten wäßrigen Lösung betrug 1075 mg/l. Die UV-Bestrahlung erfolgte nach Zugabe von H₂O₂. Der Verlauf des Schadstoffabbaus folgt aus der Tabelle. Es zeigt sich, daß der CSB-Gehalt auf 25 mg/l abgesenkt werden konnte - dies entspricht einer Zerstörungsrate von 98 %.

| t (min) | T (^{o}C) | pH | H₂O₂-Konz. (mg/l) | CSB-Wert (mg/l) |
|---|---|---|---|---|
| 0 | 21 | 7,7 | 6580 | 1075 |
| 10 | 45 | 3,7 | 5510 | 910 |
| 20 | 50 | 3,4 | 4560 | 710 |
| 30 | 50 | 3,2 | 3370 | 520 |
| 45 | 50 | 3,1 | 1170 | 260 |
| 60 | 50 | 3,7 | 70 | 125 |
| 70 | 50 | 4,7 | 0 | 25 |

## Patentansprüche

1. Verfahren zum Abbau von polymeren organischen Schadstoffen in Wasser durch Zugabe Hydroxylradikale bildender Verbindungen, insbesondere Wasserstoffperoxid, zum zu behandelnden schadstoffhaltigen Wasser und UV-Bestrahlung, insbesondere mit polychromatischer Strahlung im Bereich von 185 bis 400 nm, in einem Batchreaktor oder Durchflußreaktor,
dadurch gekennzeichnet,
daß man die Bestrahlung in einem Reaktor durchführt, dessen Verhältnis von nicht-bestrahltem zu bestrahltem Volumen, bestimmt durch die Eindringtiefe bei einer Wellenlänge von 265 nm, größer 2 ist, der Reaktor ein spezifisches Volumen von 4 bis 1000 l pro kW elektrischer Leistung des/der UV-Strahler aufweist und bei Verwendung eines Durchflußreaktors dieser pro Stunde von der 0,25- bis 25-fachen Menge seines Eigenvolumens an zu behandelndem Wasser durchströmt wird.

2. Verfahren nach Anspruch 1,
dadurch gekennzeichnet,
daß es sich bei den abzubauenden Schadstoffen um wasserlösliche oder wasserdispergierbare Lackbindemittel handelt.

3. Verfahren nach Anspruch 2,
dadurch gekennzeichnet,
daß es sich bei den Lackbindemitteln um Polymerisate und Copolymerisate auf der Basis von Acryl- und/oder Methacrylsäureestern oder um Polyurethanharze handelt.

4. Verfahren nach einem der Ansprüche 1 bis 3,
dadurch gekennzeichnet,
daß im Reaktor das Volumen von nicht-bestrahltem zu bestrahltem Volumen größer 5 ist.

5. Verfahren nach einem oder mehreren der Ansprüche 1 bis 4,
dadurch gekennzeichnet,
daß der Reaktor ein spezifisches Volumen von über 10 bis 200 l pro kW elektrischer Leistung des/der UV-Strahler aufweist.

6. Verfahren nach einem oder mehreren der Ansprüche 1 bis 5,
dadurch gekennzeichnet,
daß man die Bestrahlung in einem Durchflußreaktor durchführt, der pro Stunde von der 0,25- bis 10-fachen, insbesondere 0,5- bis 5-fachen Menge, seines Eigenvolumens an zu behandelndem Wasser durchströmt wird.

7. Verfahren nach einem oder mehreren der Ansprüche 1 bis 6,
dadurch gekennzeichnet,
daß man das zu behandelnde Wasser durch mehrere, hintereinander geschaltete Durchflußreaktoren strömen läßt.

8. Verfahren nach einem oder mehreren der Ansprüche 1 bis 7,
dadurch gekennzeichnet,
daß man dem zu behandelnden Wasser zusätzlich Übergangsmetallkatalysatoren, insbesondere Eisenverbindungen, zur Unterstützung der Oxidation von Schadstoffen mit Wasserstoffperoxid zusetzt.
